# EUROPEAN PATENT APPLICATION

(11) **EP 1 638 294 A1**
(43) Date of publication of application: **22.03.2006**
(21) Application number: 04255697.7
(22) Date of filing: 18.09.2004
(51) Int. Cl.: H04L 29/12

(54) **Network-connecting method dispensing with IP configuration**

(71) Applicant: Zyxel Communications Corporation, Hsin-Chu, Taiwan (TW)
(72) Inventor: Hung, Chia-Li, Banciao City. Taipei ounty 220 (TW)
(74) Representative: Dearing-Lambert, Peter Richard

(57) **Abstract**

A network-connecting method dispenses with IP configuration and enables a computer (10) accessing a network through a network device. The computer (10) sends a data packet containing a destination IP address. The network device receives the data packet and judges whether the data packet is an address resolution protocol (ARP) packet. The network device judges whether a default IP address for a gateway (20) of the computer (10) exists when the data packet is an ARP packet. The network device sends an MAC address of the network device to the computer (10) when the default IP address does not exist, whereby the network device acts as a gateway (20) of the computer (10) and exchanges packet between the computer (10) and the network. The computer (10) can automatically access network without the effort of resetting IP configuration.

## Description

### BACKGROUND OF THE INVENTION

### 1. Field of the invention

The present invention relates to a network-connecting method dispensing with IP configuration, especially to a network-connecting method using a network device such as modem, router, gateway or WAP for connecting a computer to a network without the need to set IP configuration for the computer.

### 2. Description of the Prior Art

The prevailing computer and network technology make people to routinely access Internet through computer at their home or their office. To link a computer to a network, the computer should be assigned with a unique IP configuration. For example, in TCP/IP network, each computer has its unique IP configuration to identify the location thereof. The formats of IP configuration are different in local area network (LAN) and wide area network (WAN).

In some situation, the IP configuration of a computer should be reconfigured. For example, two identical IP configurations for computers are present in a network, or a computer has wrong IP configuration, or a computer is moved to another network.

Moreover, as the prevalence of mobile computing, new notebook computers are generally equipped with wireless LAN card for wireless connection to a wireless access point (WAP). Therefore, users can access Internet freely in restaurants or bookstores by their notebook computers.

The mobility for wireless network accessing is limited by the IP configuration of the notebook computer. More particularly, the IP configuration of the notebook computer requires reconfiguration if the notebook computer is brought to other place for wireless network accessing.

For example, if the IP address in an office is 192.168.10.X and a home IP address is 192.168.1.1 for a user, the user should change the IP address setting in his computer to 192.168.1.1 when he brings his computer from office to home for accessing network. Moreover, the user should change the IP address setting in his computer back to 192.168.10.X when he brings his computer from home to office for accessing network in office.

As can be seen from above description, the IP configuration for network is an issue for user especially when he want to access network in different places and the IP configuration for network is not easy for ordinary user.

### SUMMARY OF THE INVENTION

It is the object of the present invention to provide a network-connecting method using a network device for connecting a computer to a network without the need to set IP configuration for the computer.

To achieve the above object, the present invention provides a network-connecting method dispensing with IP configuration and enabling a computer accessing a network through a network device. The computer sends a data packet containing a destination IP address. The network device receives the data packet and judges whether the data packet is an address resolution protocol (ARP) packet. The network device judges whether a default IP address for a gateway of the computer exists when the data packet is an ARP packet. The network device sends an MAC address of the network device to the computer when the default IP address does not exist, whereby the network device acts as a gateway of the computer and exchanges packet between the computer and the network. The computer can automatically access network without the effort of resetting IP configuration.

In one aspect of the present invention, the computer is determined for not moving to new network, if the network identifies the data packet being not an ARP packet. Therefore, the computer will access network by a default gateway already set therein and the gateway will exchange data packet between the computer and the network.

In another aspect of the present invention, the computer is determined for moving to new network and the computer still uses default gateway, if the network identifies the data packet being an ARP packet and the default gateway exists.

The above summaries are intended to illustrate exemplary embodiments of the invention, which will be best understood in conjunction with the detailed description to follow, and are not intended to limit the scope of the appended claims.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
**Fig.1** shows a schematic diagram of the application for the present invention;
**Fig. 2** shows a flowchart of the network-connecting method according to the present invention;
**Fig. 3** shows a flowchart of the automatic detection scheme according to the present invention;
**Fig. 4** shows the message asking user to examine network connection;
**Fig. 5** shows the message for asking the user to wait for a moment;
**Fig. 6** shows the message for user to find help from ISP; and
**Fig. 7** shows the message to ask user to input user name and password again.

### DETAILED DESCRIPTION OF THE INVENTION

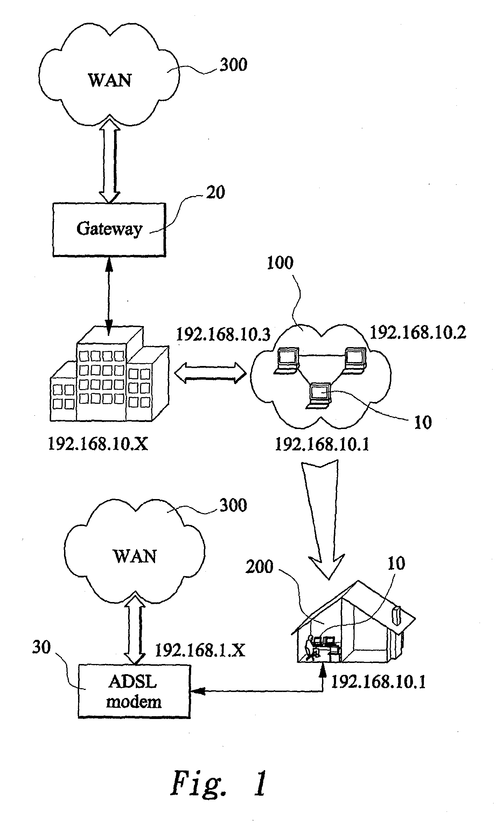

**Fig. 1** shows a schematic diagram of the application for the present invention. The present invention is intended to solve the problem of reconfiguring IP configuration when a computer **10** is moved from a first network to a second network. In **Fig. 1,** the first network is exemplified as office LAN **100** and the second network is exemplified as home LAN **200** for description.

The office LAN **100** generally comprises a plurality of computers sharing one set or multiple sets IP addresses. The IP address for each computer in the office LAN **100** is assigned automatically by dynamic host configuration protocol (DHCP) or manually. After configuration, the computer is connected to a WAN **300** such as Internet through a network gateway **20** within the office. Moreover, in this example, the IP address of network gateway **20** is 192.168.10.X, and the IP address of the exemplified computer is assumed to be 192.168.10.1.

When user brings his computer **10** back home for connecting to home LAN **200,** the computer **10** might be connected to the WAN **300** such as Internet through dialup service, for example, through an ADSL modem (ATU-R) **30.** If the IP address of the ADSL modem **30** is 192.168.1.X, the user should manually set the IP address of the computer **10** to 192.168.1.1 if DHCP is not involved.

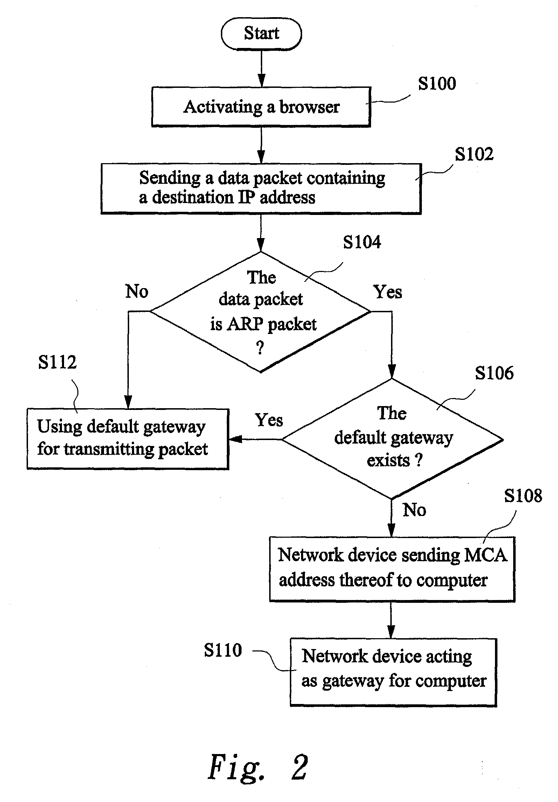

**Fig. 2** shows a flowchart of the network-connecting method according to the present invention. In the present invention, a network device is installed with a zero configure connecting procedure for connecting a computer to a network without the effort of resetting IP configuration. The network device can be, for example, an ADSL modem, a router, a gateway, a hub, a IP sharing or WAP The network can be a LAN **100** or a WAN **300.**

When the user moves the computer **10** from office to home, the computer 10 is linked to the network device either through wired network card or wireless network card and accesses the network without the effort of resetting IP configuration in the computer **10**

The zero configure connecting procedure according to the present invention first activates a browser software, an e-mail software or any network software on the computer **10** at step **S100.** The computer **10** then sends a data packet containing a destination IP address in step **S102.** The IP address can be the IP address of any server such as Yahoo server or the IP address of any computer in the LAN.

The network device will judges whether the data packet is an address resolution protocol (ARP) packet instead of a packet asking the MCA address of the network device per se in step **S104** after the network device receives the data packet containing the destination IP address.

If the data packet is an ARP packet, the network device will judge whether the address of the default gateway in the computer **10** exists in step S106. If the address of the default gateway of office network for the computer 10 is 192.168.10.X, then the request sent to the address 192.168.10.X will not be responded after the computer **10** is moved to home.

At this time, the network **device** will send the MCA address thereof to the computer **10** in step **S108.** The computer **10** will send data packet to the MCA address of the network device such that the network device is functioned as the gateway of the computer **10** at step **S110.** Therefore, the network device will process the packet sent by the computer **10** and is simulated as the computer 10 with respect to destination end. In other word, the network device will interchange packet with the destination IP address in step **S112.**

The MCA address is unique for any network interface card. The computers in a network can communicate to each other when the MCA address of the gateway is known. Therefore, the computer can exchange data packet with the network device when the computer knows the MCA address of the network device. Through the network device, the computer can exchange data packet to any destination device without the effort of resetting IP configuration.

If the data packet received by the network device is not an ARP packet in step **S104,** the computer **10** will send data packet to a default gateway **20** and the default gateway **20** will transfer the data packet to the destination IP address in step **S112.** For example, the computer **10** in office generally transmits data packet to external WAN through a gateway.

Moreover, if the data packet received by the network device is an ARP packet in step **S104** and the address of the default gateway in the computer **10** exists in step **S106,** then the computer **10** will send data packet to the default gateway and the default gateway **20** transfers the data packet to the destination IP address in step **S112.** For example, if the computer is moved to office again and connected to network for the first time, the computer will be connected to network through this way.

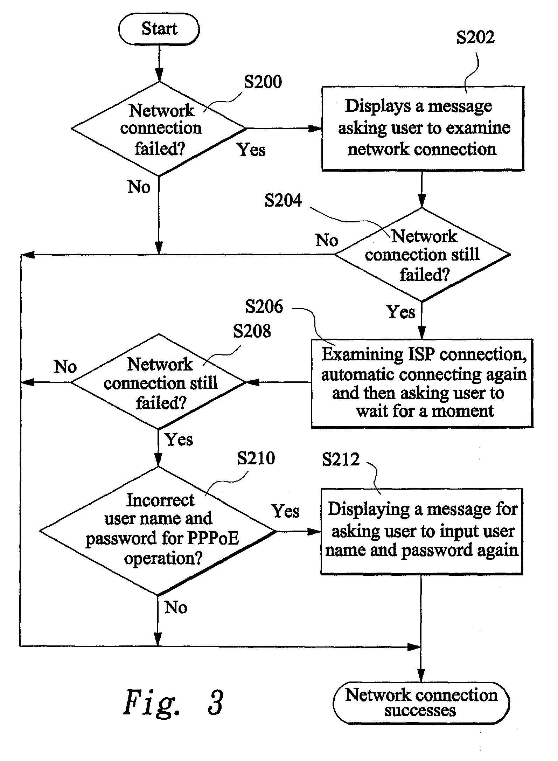

The above-mentioned situation is applied for network in normal connection. Moreover, the present invention also provides an automatic detection scheme for computer accessing network for the first time or failing to access network. The automatic detection scheme can set up IP configuration automatically for user. **Fig. 3** shows the flowchart of the automatic detection scheme.

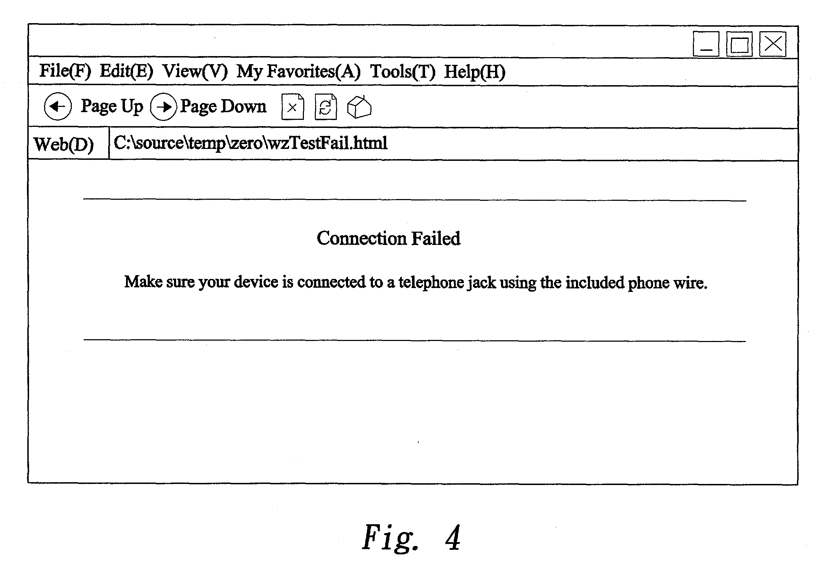

As shown in **Fig. 3,** if the computer **10** cannot send or exchange data packet in step **S200,** the network device sends a message to the computer **10** such that the browser in the computer **10** displays a message asking user to examine network connection in step **S202. Fig. 4** shows the message asking user to examine network connection.

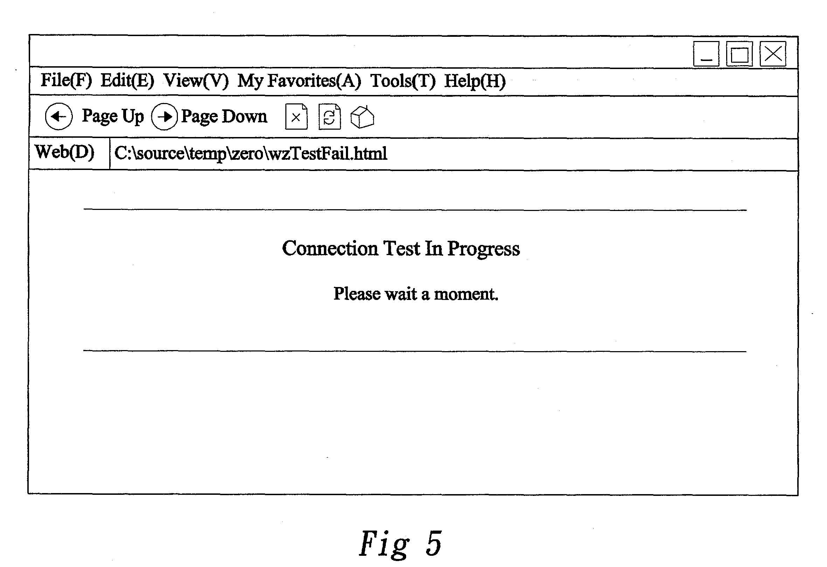

If the network connection of the network device is correct after examination and the computer **10** cannot send or exchange data packet in step **S204,** the network device will examine the connection status with the ISP office end. Afterward the network device will again establish network connection and send a message to browser for asking the user to wait for a moment in step **S206. Fig. 5** shows the message for asking the user to wait for a moment.

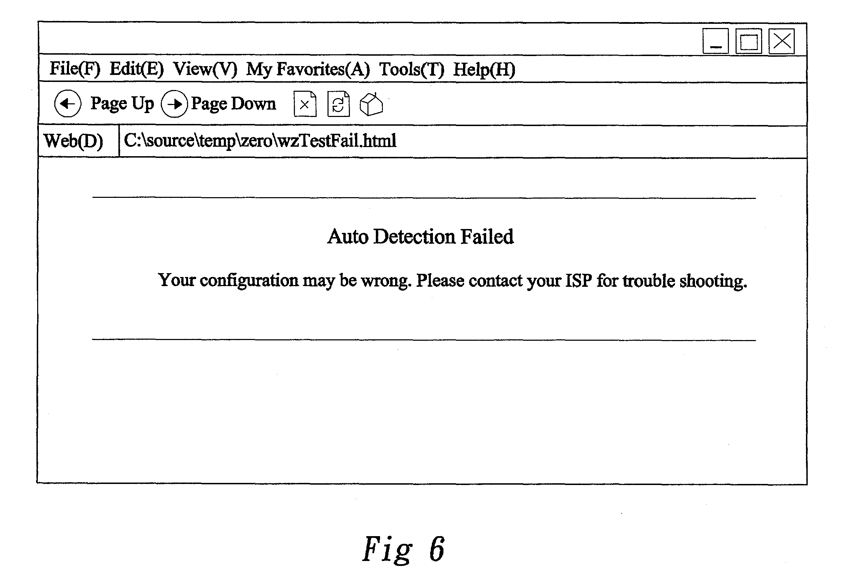

If the reconnection still fails, a message is displayed on browser to ask user to find help from ISP as shown in **Fig. 6.**

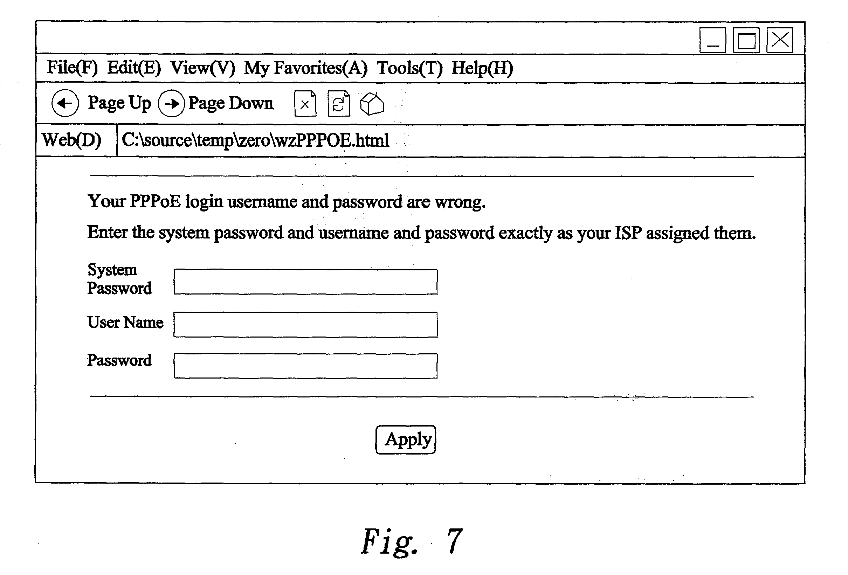

If the reconnection successes but the network is not accessible, the network device will examine the correctness of the user name and password for PPPoE (Point to Point Protocol over Ethernet) operation in step **S210.** If the user name and password are not correct for PPPoE operation, a message is sent to browser to ask user to input user name and password again in step S212, as shown in **Fig. 7.** The input user name and password are saved if they are correct, whereby the network connection can be automatically achieved.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A network-connecting method dispensing with IP configuration, the method enabling a computer (10) accessing a network through a network device and comprising the steps of:
(a) the computer (10) sending a data packet containing a destination IP address;
(b) the network device receiving the data packet and judging whether the data packet is an address resolution protocol (ARP) packet;
(c) judging whether a default IP address for a gateway (20) of the computer (10) exists when the data packet is an ARP packet; and
(d) sending an MAC address of the network device to the computer (10) when the default IP address for the gateway (20) of the computer (10) does not exist, whereby the network device acts as a gateway (20) of the computer (10) and exchanges packet between the computer (10) and the network.

2. The network-connecting method as in claim 1, wherein the network device is one of an ADSL modem (30), a router, a gateway (20), a hub, a IP sharing and wireless access point (WAP).

3. The network-connecting method as in claim 1, wherein the network is one of a local area network (LAN) (100) and a wide-area network (WAN) (300).

4. The network-connecting method as in claim 1, further comprising a step before the step (a):
activating a browser software, an e-mail software or any network software on the computer (10).

5. The network-connecting method as in claim 1, wherein the destination IP address in the step (a) is an IP address of any server or an IP address of any computer (10) in a LAN.

6. The network-connecting method as in claim 1, wherein in the step (a) the computer (10) is connected to the network device through a wired network card or a wireless network card.

7. The network-connecting method as in claim 1, further comprising a step after the step (b):
sending packet to a gateway (20) according to a default gateway (20) address therein when the data packet is not an ARP packet; the packet sent by the computer (10) being sent to destination IP address through the gateway (20).

8. The network-connecting method as in claim 1, further comprising a step after the step (d):
sending packet to the gateway (20) according to a default gateway address therein when the gateway (20) of the computer (10) exists; the packet sent by the computer being sent to destination IP address through the gateway (20).

9. The network-connecting method as in claim 1, further comprising a step after the step (d):
displaying a message on the computer to ask user to examine connection between the network device and the network when the computer (10) cannot send or receive packet.

10. The network-connecting method as in claim 1, further comprising steps after the step (d):
the network device examining a user name and a password for accessing the network when the computer (10) cannot send or receive packet;
displaying a message on the computer (10) to ask user to input correct user name and password when the user name and the password for accessing the network are not correct; and
saving the input user name and password.
